Europäisches Patentamt

European Patent Office

Office européen des brevets

(11) Veröffentlichungsnummer: **0 279 084 B1**

(12) **EUROPÄISCHE PATENTSCHRIFT**

(45) Veröffentlichungstag der Patentschrift: **12.06.91**

(21) Anmeldenummer: **87202555.6**

(22) Anmeldetag: **16.12.87**

(51) Int. Cl.⁵: **B29B 17/00, B29B 13/02, G03C 11/00, F23G 7/00**

(54) **Verfahren und Vorrichtung zur Vernichtung von Mikrofilmen.**

(30) Priorität: **23.12.86 DE 3644131**

(43) Veröffentlichungstag der Anmeldung:
**24.08.88 Patentblatt 88/34**

(45) Bekanntmachung des Hinweises auf die
Patenterteilung:
**12.06.91 Patentblatt 91/24**

(84) Benannte Vertragsstaaten:
**AT BE CH DE ES FR GB GR IT LI LU NL SE**

(56) Entgegenhaltungen:
**EP-A- 0 084 524       AT-B- 342 958**
**DE-A- 2 843 620       DE-C- 821 382**
**DE-U- 8 525 903       US-A- 3 831 908**

**PATENT ABSTRACTS OF JAPAN, Band 5, Nr.
83 (M-71)[755]; & JP-A-56 30 822 (TOSHIROU
WATANABE) 28-03-1981**

(73) Patentinhaber: **Classen-Papertronics KG
Landsberger Strasse 80
W-4300 Essen 18(DE)**

(72) Erfinder: **Maahs, Werner
Posener Strasse 10
W-2805 Stuhr 1(Brinkum)(DE)**

(74) Vertreter: **Ackmann, Günther, Dr.-Ing.
Claubergstrasse 24 Postfach 10 01 01
W-4100 Duisburg 1(DE)**

## Beschreibung

Mikrofilme, deren Trägerfolie aus Kunststoff, z.B. Polyester, besteht, müssen in der Regel unter Beachtung des Datenschutzes vernichtet werden. Hierfür werden die Mikrofilme üblicherweise in aufwendigen Schneidwerken zu Schnitzeln zerkleinert, die dann in großen Verbrennungsöfen von Kraftwerken o. dgl. verbrannt werden. Diese Schneidwerke sind dabei einem hohen Verschleiß ausgesetzt, von dem Kunststoff verschmiert und verstopft. Aus Gründen des Datenschutzes dürfen die unzerkleinerten Mikrofilme auch nicht unmittelbar zur Verbrennung in Müllverbrennungsöfen an Kraftwerke o. dgl. geliefert werden. Diese Datenschutzmaßnahmen gelten noch verstärkt, wenn die Mikrofilme geheimhaltungsbedürftige Daten tragen. Bekannt ist auch eine Vernichtung von Mikrofilmen durch Wärmeeinwirkung. Nach der FR-PS 23 99 278 sollen die in eine Metallhülle eingelegten Filme in einem elektrischen Heizofen geschmolzen werden. Bei der Ausführung nach der FR-PS 22 94 469 werden die Filme auf einem Transportband an einer Heizstation vorbeigeführt, und die EP 00 05 405 BI beschreibt eine Vorrichtung, bei der die Filme in einen dicht verschließbaren Rohrkörper eingelegt und ebenfalls in einem elektrischen Heizofen geschmolzen werden. Da die Mikrofilme unter starker Hitzeentwicklung äußerst schnell verbrennen können, ist eine Vernichtung in kleineren Heizungsöfen jedoch nicht zulässig. Außerdem klebt das Schmelzgut an der Transportvorrichtung bzw. im Rohrkörper fest und läßt sich nach dem Erkalten nur schwer entfernen.

Zur Rückgewinnung von geschäumtem Kunststoff ist aus JP 56-30822 bekannt, die Schmutzstoffstücke in einen nach unten offenen Trichter einzufüllen, der auf ein Heißluftgerät aufgesetzt wird. Dieses ist mit transportablen Gasbrennern versehen und weist eine Auffangkammer für den geschmolzenen Kunststoff aus. Für die Vernichtung von Mikrofilmen ist diese Einrichtung nicht geeignet, da diese unmittelbar durch den Trichter hindurchfallen würden. In der DE 821382 ist ein Verfahren und eine Einrichtung zum Erweichen oder Schmelzen thermoplastischer Stoffe durch Wärme in einem Kondensatorfeld beschrieben, wobei die Kunststoffteilchen auf rostartig ausgebildeten Elektroden aufliegen. Zum Aufschmelzen des Kunststoffmaterials ist ein ständiger Andruck erforderlich, der entweder durch Vakuum unterhalb des Rostes oder durch Überdruck auf die Kunststoffmasse erzeugt wird, wobei das hierzu dienende Druckgas zwecks Vorwärmung des zu erweichenden Stoffes auf eine erhöhte Temperatur gebracht wird. Der mit einer Dosierschleuse versehene Schmelzofen ist zur Vernichtung von Mikrofilmen nicht ohne weiteres geeignet.

Der Erfindung liegt daher die Aufgabe zugrunde, ein verbessertes Verfahren und eine hierfür geeignete Vorrichtung zur Vernichtung von Mikrofilmen durch Wärmeentwicklung zu entwickeln, wobei die bei der bekannten Vernichtungsmethode auftretenden Schwierigkeiten vermieden werden.

Diese Aufgabe wird erfindungsgemäß dadurch gelöst, daß die Mikrofilme auf einem Ablagerost von Heißluft angeströmt und geschmolzen werden und das Schmelzgut durch den Ablagerost in einen Auffangbehälter tropft und darin erstarrt.

Nach der Erfindung werden die auf den Mikrofilmen befindlichen Daten durch Schmelzen der Mikrofilme vernichtet.

Die erstarrte Schmelze läßt eine nachträgliche Datenerfassung grundsätzlich überhaupt nicht mehr zu und ist daher absolut sicher. Ein nachträgliches Zusammenfügen von Mikrofilmschnitzeln, wie bei der Schnitzelmethode noch denkbar, ist unmöglich. Die erstarrte Schmelze kann dann in einer sehr kompakten Form Verbrennungsöfen von Kraftwerken o. dgl. zugeführt werden. Die kompakte Form verhindert auch eine zu schnelle Verbrennung mit einer starken Hitzeentwicklung. Da die Kunststoffe, aus denen die Mikrofilme bestehen, weit unter ihrer Entzündungstemperatur schmelzen, ist ein gefahrloses Aufschmelzen mit einer zum Aufschmelzen ausreichenden Temperatur möglich; die Schmelztemperaturen der für Mikrofilme verwendeten Kunststoffe liegen überwiegend zwischen 100 bis 250° C. Durch lockeres Aufschütten der Mikrofilme auf dem Ablagerost wird eine sehr kurze Schmelzzeit erhalten. Die Verwendung eines Heißluftstromes als Wärmeträger verursacht eine schnelle Wärmeübertragung durch Konvektion.

Das erfindungsgemäße Verfahren ist in einfacher Weise mit einem Heißluftschmelzofen ausführbar, der aus einer mit einem Ablagerost ausgerüsteten Schmelzkammer, einem unter dem Ablagerost angeordneten Auffangbehälter, einem Heißlufterzeuger und Einrichtungen besteht, welche die Heißluft durch die Schmelzkammer transportieren, wobei die Schmelzkammer mit einem von oben einhängbaren Drahtkorb versehen ist, dessen Boden den Ablagerost bildet. Der Drahtkorb ist schnell und leicht zu handhaben. Dieser Heißluftschmelzofen kann dort aufgestellt und eingesetzt werden, wo die zu vernichtenden Mikrofilme anfallen.

Für eine günstige Führung des Heißgases ist die Schmelzkammer zweckmäßig an einer Wandseite mit einem Einströmschlitz für die Heißluft und auf der gegenüberliegenden Wandseite mit einer Absaugöffnung versehen und in der Schmelzkammer vor dem Einströmschlitz sowie der Absaugöffnung mit Abstand zur jeweiligen Wandseite ist je eine Zwischenwand angeordnet, welche eine am oberen Rand zur Schmelzkammer offene Verteilerkammer bzw. Ansaugkammer bildet. Die Zwischenwand auf der Einströmseite in Höhe über dem Ablagerost kann mit Lochungen versehen sein.

Um den Füllgrad des Auffangsbehälters zu kontrollieren, steht der Auffangbehälter auf einer federbelasteten Schwingplatte, die bei einer vorbestimmten Belastung einen elektrischen Schaltkontakt für eine Kontrolleuchte einschaltet. Der Auffangbehälter besteht vorzugsweise aus Papier und Karton, ist also ein Wegwerfbehälter, der mit der erstarrten Schmelze z. B. in einem Müllverbrennungsofen verbrannt werden kann.

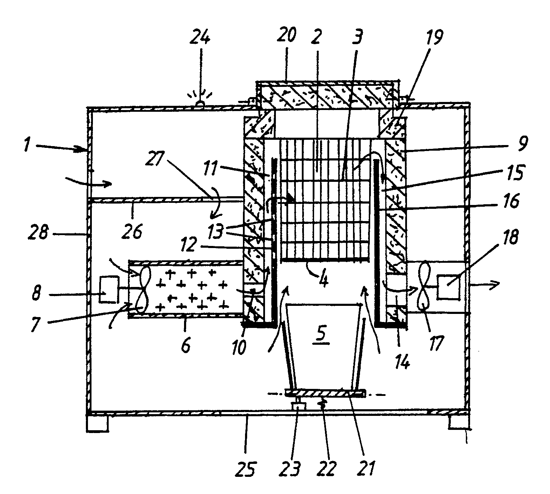

Ein zur Durchführung des Verfahrens geeigneter Heißluftschmelzofen 1 ist in der Zeichnung beispielsweise in einem Querschnitt dargestellt. Dieser Heißluftschmelzofen 1 besteht im wesentlichen aus einer Schmelzkammer 2, in der sich ein Drahtkorb 3 befindet, dessen Boden einen Ablagerost 4 für die zu vernichtenden Mikrofilme bildet. Unter der z. B. im Grundriß quadratischen Schmelzkammer 2 ist ein Auffangbehälter 5 angeordnet, der vorzugsweise aus Papier oder Karton besteht und mit der eingetropften, erstarrten Schmelzmasse verbrannt werden kann. Dem Heißluftschmelzofen 1 ist weiterhin ein Heißlufterzeuger 6 und ein Gebläse 7 zugeordnet, das von einem Elektromotor 8 angetrieben wird. Das Gebläse 7 fördert Luft durch den Heißlufterzeuger 6 und über einen Einströmschlitz 10 in eine Verteilerkammer 11, die von einer hitzebeständigen und wärmeisolierenden Auskleidung 9 und einer Zwischenwand 12 gebildet wird, die beispielsweise eine Metallplatte ist. Der Einströmschlitz 10 befindet sich im unteren Bereich der Schmelzkammer 2, während im oberen Bereich in der Zwischenwand 12 Lochungen 13 derart angeordnet sind, daß die Heißluft über die ganze Höhe des Drahtkorbes 3 in den Drahtkorb strömt und die darin befindlichen Mikrofilme beaufschlagt. An der gegenüberliegenden Wand der Schmelzkammer 2 befindet sich eine Absaugöffnung 14, ebenfalls im unteren Bereich, wobei dieser Absaugöffnung 14 ein von einem Elektromotor 18 angetriebenes Absauggebläse 17 zugeordnet ist. Die vorgenannten Bauteile sorgen dafür, daß die Heißluft durch die Lochungen 13 auf die im Drahtkorb 3 befindlichen Mikrofilme einwirkt und diese zum Schmelzen bringt. Die Abluft wird dann vom Absauggebläse 17 im oberen Bereich der Schmelzkammer 2 in eine Ansaugkammer 15 gesaugt und durch die Absaugöffnung 14 nach außen abgeführt. Das Absauggebläse 17 zieht nicht nur die Luft aus der Schmelzkammer 2 ab, sondern saugt auch von unten her Frischluft an, die an dem Auffangbehälter 5 entlangströmt und das Erstarren der abgetropften Schmelze beschleunigt. Die Ansaugkammer 15 wird durch die Wand der Schmelzkammer 2 und eine Zwischenwand 16 aus Blech gebildet.

Am oberen Rand der Schmelzkammer 2 ist ein Randteil 19 angebracht, das ebenfalls aus einem hitzebeständigen, wärmeisolierenden Werkstoff besteht und einen luftdichten Abschluß zu einem aufklappbar am Gerätegehäuse 28 angelenkten Fülldeckel 20 bildet, der auch mit einer entsprechenden hitzebeständigen und wärmeisolierenden Auskleidung versehen ist.

Der unter der Schmelzkammer 2 angeordnete Auffangbehälter 5 steht auf einer Schwingplatte 21, die von einer Druckfeder 22 nach oben geschwungen wird und die bei einer durch einen vorgegebenen Füllgrad verursachten Belastung einen elektrischen Schaltkontakt 23 für eine Kontrolleuchte 24 einschaltet. Die Bodenplatte des Gerätegehäuses 28 ist mit einer Bodenöffnung 25 versehen, so daß durch das Absauggebläse 17 Frischluft angesaugt wird, die beim Vorbeiströmen am Auffangbehälter 5 die darin eingetropfte Schmelzmasse abkühlt.

Zur Kühlung der auf einer Trägerplatte 26 des Gerätegehäuses 28 angeordneten elektronischen Bauteile wird die aufzuheizende Frischluft zunächst durch eine Öffnung 27 angesaugt und über diese elektronischen Bauteile geführt.

## Ansprüche

1. Verfahren zur Vernichtung von Mikrofilmen aus Kunststoff durch Wärmeeinwirkung, dadurch gekennzeichnet, daß die Mikrofilme auf einem Ablagerost (4) von Heißluft angeströmt und geschmolzen werden und das Schmelzgut durch den Ablagerost (4) in einen Auffangbehälter (5) tropft und darin erstarrt.

2. Heißluftschmelzofen (1) zur Durchführung des Verfahrens nach Anspruch 1, bestehend aus einer mit einem Ablagerost (4) ausgerüsteten Schmelzkammer (2), einem unter dem Ablagerost (4) angeordneten Auffangbehälter (5), einem Heißlufterzeuger (6) und Einrichtungen, welche die Heißluft durch die Schmelzkammer (2) transportieren, dadurch gekennzeichnet, daß die Schmelzkammer (2) mit einem von oben einhängbaren Drahtkorb (3) versehen ist, dessen Boden den Ablagerost (4) bildet.

3. Heißluftschmelzofen nach Anspruch 2, dadurch gekennzeichnet, daß die Schmelzkammer (2) an einer Wandseite mit einem Einströmschlitz (10) für die Heißluft und auf der gegenüberliegenden Wandseite mit einer Absaugöffnung (14) versehen ist und daß in der Schmelzkammer (2) vor dem Einströmschlitz (10) sowie der Absaugöffnung (14) mit Abstand zur jeweiligen Wandseite je eine Zwischenwand (12 bzw. 16) angeordnet ist, welche eine am oberen Rand zur Schmelzkammer (2) offene Verteilerkammer (11) bzw. Ansaugkammer (15) bildet.

4. Heißluftschmelzofen (1) nach Anspruch 3, dadurch gekennzeichnet, daß die Zwischenwand (12) auf der Einströmseite in Höhe über dem Ablagerost (4) mit Lochungen (13) versehen ist.

5. Heißluftschmelzofen (1) nach einem der Ansprüche 2 bis 4, dadurch gekennzeichnet, daß der Auffangbehälter (5) auf einer federbelasteten Schwingplatte (21) steht, die bei einer vorbestimmten Belastung einen elektrischen Schaltkontakt (23) für eine Kontrolleuchte (24) einschaltet.

6. Heißluftschmelzofen (1) nach einem der Ansprüche 2 bis 5, dadurch gekennzeichnet, daß der Auffangbehälter (5) aus Papier oder Karton besteht.

## Claims

1. A method of destroying plastic microfilms by the action of heat, characterised in that the microfilms deposited on a grate (4) are subjected to a flow of hot air and melted and the melt drips through the grate (4) into a collecting receptacle (5) In which it solidifies.

2. A hot-air melting furnace (1) for performing the method according to claim 1, consisting of a melt chamber (2) equipped with a grate (4), a collecting receptacle (5) disposed beneath the grate (4), a hot-air generator (6) and means which convey the hot air through the melt chamber (2), characterised in that the melt chamber (2) is provided with a wire cage (3) which can be suspended from above and the bottom of which forms the grate (4).

3. A hot-air melting furnace according to claim 2, characterised in that one wall side of the melt chamber (2) is provided with an entry slot (10) for the hot air and the opposite wall side is provided with an extraction aperture (14) and in that partitions (12 and 16 respectively) are disposed in the melt chamber (2) in front of the entry slot (10) and in front of the extraction aperture (14) at a distance from the associated wall side, said partitions respectively forming a distributor chamber (11) and intake chamber (15) which are open towards the malt chamber (2) at the top edge.

4. A hot-air melting furnace (1) according to claim 3, characterised in that the partition (12) Is formed with perforations (13) on the entry side vertically above the grate (4).

5. A hot-air melting furnace (1) according to any one of claims 2 to 4, characterised in that the collecting receptacle (5) is disposed on a spring-loaded swing plate (21) which, at a predetermined load, switches on an electrical switching contact (23) for a pilot light (24).

6. A hot-air melting furnace (1) according to any one of claims 2 to 5, characterised in that the collecting receptacle (5) consists of paper or cardboard.

## Revendications

1. Procédé de destruction de microfilms en matière plastique par action de la chaleur, caractérisé en ce qu'il consiste à envoyer de l'air chaud sur les microfilms sur une grille de dépôt (4) et à les faire fondre et à faire s'égoutter le produit fondu à travers la grille de dépôt (4) dans une cuve de réception (5) et à l'y solidifier.

2. Four de fusion à air chaud (1) pour la mise en oeuvre du procédé suivant la revendication 1, constitué d'une chambre de fusion (2) munie d'une grille de dépôt (4), d'une cuve de réception (5) disposée sous la grille de dépôt (4), d'une source d'air chaud (6) et de dispositifs qui transportent l'air chaud dans la chambre de fusion (2), caractérisé en ce que la chambre de fusion (2) est munie d'un panier en fil métallique (3) dont le fond forme la grille de dépôt (4).

3. Four de fusion à air chaud suivant la revendication 2, caractérisé en ce que la chambre de fusion (2) est munie sur un côté de paroi d'une fente d'entrée (10) de l'air chaud et, sur le côté de paroi opposé, d'un orifice d'aspiration (14), et en ce que, dans la chambre de fusion (2) sont prévues, devant la fente d'entrée (10) ainsi que devant l'orifice d'aspiration (14) et à distance des côtés de parois, des parois intermédiaires (12 et 16) qui forment une chambre formant répartiteur (11) et une chambre d'aspiration (15) ouvertes au bord supérieur en direction de la chambre de fusion (2).

4. Four de fusion à air chaud (1) suivant la revendication 3, caractérisé en ce que la paroi intermédiaire (12) est munie, du côté de l'entrée, de trous (14) au-dessus de la grille de dépôt (4).

5. Four de fusion à air chaud (1) suivant l'une des revendications 2 à 4, caractérisé en ce que la cuve de réception (5) repose sur un plateau oscillant (21) qui est chargé par un ressort et qui, pour une charge prescrite, ferme un interrupteur électrique (23) pour une lampe de contrôle (24).

6. Four de fusion à air chaud (1) suivant l'une des revendications 2 à 5, caractérisé en ce que la cuve de réception (5) est en papier ou en carton.